# EUROPEAN PATENT APPLICATION

(11) **EP 4 252 559 A1**
(43) Date of publication of application: **04.10.2023**
(21) Application number: 21896641.4
(22) Date of filing: 19.10.2021
(51) Int. Cl.: A24F 40/00, A24F 47/00

(54) **ATOMIZATION CORE, ATOMIZER COMPRISING SAME, AND ELECTRONIC CIGARETTE**

(30) Priority: 24.11.2020 CN 202011330889
(71) Applicant: Shenzhen Relx Technology Co., Ltd., Shenzhen City, Guangdong Province 518108 (CN)
(72) Inventor: FENG, Shuting, Shenzhen, Guangdong 518108 (CN); FU, Yao, Shenzhen, Guangdong 518108 (CN); QIAN, Yaming, Shenzhen, Guangdong 518108 (CN); CHEN, Liucheng, Shenzhen, Guangdong 518108 (CN)
(74) Representative: Schmidt, Steffen J.
(86) International application number: PCT/CN2021/124709
(87) International publication number: WO 2022/111139

(57) **Abstract**

This application relates to an atomization core and an atomizer including same and an electronic cigarette. The atomization core includes a porous ceramic substrate and a heating layer arranged on the porous ceramic substrate, wherein the permeation rate of the porous ceramic substrate is in a range of 0.8 mg/s.bar.mm² to 4.0 mg/s.bar.mm². In this application, problems of dry heating and oil leakage of the atomization core are resolved by using the porous ceramic substrate with a proper permeation rate. Through the electronic cigarette in this application, a relatively large smoke generation rate and a relatively large smoke amount can be realized, thereby improving an inhalation experience for users.

## Description

### Technical Field

This application relates to atomization devices, and in particular, to an atomization core and an atomizer including same and an electronic cigarette.

### Background

For personal health, environmental protection, and convenience of use, electronic cigarettes are increasingly popular among consumers as a substitute for traditional tobacco. Electronic cigarettes or electronic atomizers atomize smoking materials at a low temperature to form vapor inhalable by users, which replaces smoke generated by traditional tobacco burning at a high temperature. An e-liquid of an existing electronic cigarette is usually transported to an atomization core for atomization under a capillary action. However, during inhalation, the atomization core usually produces a burnt taste or other harmful substances due to dry heating or oil leakage, which affects the experience and taste of users.

Therefore, further study and improvement are required for the atomization core of electronic cigarettes.

### Summary of the Invention

This application provides an atomization core applicable to an electronic cigarette and including a porous ceramic substrate with the permeation rate in a range of 0.8 mg/s.bar.mm² to 4.0 mg/s.bar.mm², to resolve problems of dry heating and oil leakage of an existing atomization core, so that the electronic cigarette does not produce harmful substances such as tar and suspended particles, thereby improving experience and taste for users.

According to an embodiment of this application, this application provides an atomization core, including: a porous ceramic substrate; and a heating layer, arranged on the porous ceramic substrate, the permeation rate of the porous ceramic substrate being in a range of 0.8 mg/s.bar.mm² to 4.0 mg/s.bar.mm².

According to another embodiment of this application, this application provides an atomizer, including: a liquid storage cavity, configured to accommodate a liquid; the above atomization core, the atomization core being configured to suck the liquid from the liquid storage cavity and atomize the liquid.

According to still another embodiment of the present application, this application provides an electronic cigarette, including the above atomizer.

Additional aspects and advantages of the embodiments of this application will be partially described, displayed, or explained through the implementation of the embodiments of this application in the subsequent description.

### Brief Description of the Drawings

In the following text, the drawings necessary to describe embodiments of this application or the related art are briefly described, to facilitate the description of the embodiments of this application. Obviously, the drawings in the following description merely show some embodiments of this application. A person skilled in the art may obtain drawings of other embodiments based on structures illustrated in the drawings without creative effort(s).

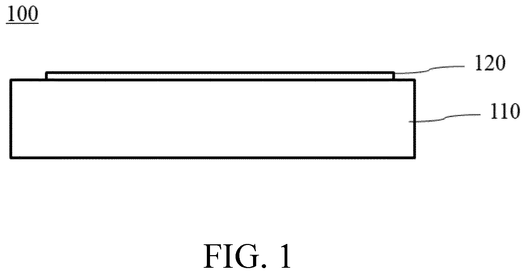

FIG. 1 is a schematic structural diagram of an atomization core according to the embodiment of this application.

### Detailed Description

Embodiments of this application are described in detail below. The embodiments of this application should not be construed as a limitation on this application.

In addition, quantities, ratios, and other numerical values are sometimes presented in a range format herein. It should be understood that such range format is used for convenience and conciseness, and should be flexibly understood, and includes not only the numerical values explicitly designated as range limits, but also all individual numerical values or subranges covered in that range, as if each numerical value and subrange were explicitly specified.

The terms "approximately", "roughly", "substantially", and "about" used herein are used for describing and explaining small changes. When used in combination with an event or a situation, the terms may mean instances where the event or the situation occurs precisely and where the event or the situation occurs very similarly. For example, when used in combination with a numerical value, the terms may mean a variation range less than or equal to ± 10% of a value, for example, less than or equal to ± 5%, less than or equal to ± 4%, less than or equal to ± 3%, less than or equal to ± 2%, less than or equal to ± 1%, less than or equal to ± 0.5%, less than or equal to ± 0. 1%, , or less than or equal to ± 0.05% of the value. For example, if a difference between two values is less than or equal to ± 10% of an average of the values (for example, less than or equal to ± 5%, less than or equal to ± 4%, less than or equal to ± 3%, less than or equal to ± 2%, less than or equal to ± 1%, less than or equal to ± 0.5%, less than or equal to ± 0.1%, or less than or equal to ± 0.05%), the two values may be considered to be "roughly" the same.

Furthermore, for ease of description, "first", "second", "third", and the like may be used herein to distinguish between different components. "First", "second", "third", and the like are not intended to limit the corresponding components.

In detailed description and claims, a list of items connected by the terms "at least one of" or other similar terms may mean any combination of the listed items. For example, if items A and B are listed, a phrase "at least one of A or B" means only A; only B; or A and B. In another example, if items A, B, and C are listed, a phrase "at least one of A, B, or C" means only A; only B; only C; A and B (excluding C); A and C (excluding B); B and C (excluding A); or all of A, B, and C. The item A may include a single component or a plurality of components. The item B may include a single component or a plurality of components. The item C may include a single component or a plurality of components.

The substances used in this application, unless otherwise specified, may be commercially purchased.

As shown in FIG. 1, an embodiment of this application provides an atomization core 100 for an electronic cigarette, comprising a porous ceramic substrate 110 and a heating layer 120. The heating layer 120 is arranged on the porous ceramic substrate 110. The porous ceramic substrate 110 has a large number of micropores that can adsorb an e-liquid, thereby heating and atomizing the e-liquid into smoke when the heating layer 120 is energized.

The inventor found through research that the permeation rate of the porous ceramic substrate 110 has a significant impact on the atomization efficiency of atomization core 100. A problem of dry heating or oil leakage of the atomization core may be resolved by changing the permeation rate of the porous ceramic substrate 110. Moreover, when the permeation rate of the porous ceramic substrate 110 is controlled within a specific range, the permeation rate of the porous ceramic substrate 110 matches the heating efficiency of the heating layer 120, which can achieve a maximum smoke amount, thereby providing users with better suction experience.

In some embodiments, the permeation rate of the porous ceramic substrate 110 may be in a range of about 0.8 mg/s.bar.mm² to about 4.0 mg/s.bar.mm². In this application, the permeation rate refers to a weight of an e-liquid passing through the porous ceramic substrate at a unit area (mm²), a unit pressure (bar), and a unit time (s). When the permeation rate of the porous ceramic substrate 110 is greater than 4.0 mg/s.bar.mm², flowing of the e-liquid is excessively fast. Therefore, some e-liquids that are not atomized are inhaled by the user with the smoke, resulting in experience similar to oil leakage. When the permeation rate of the porous ceramic substrate 110 is less than 0.8 mg/s.bar.mm², the flowing of the e-liquid in the porous ceramic substrate 110 is excessively slow, leading to dry heating, which generates harmful substances such as formaldehyde. In some embodiments, the permeation rate of the porous ceramic substrate 110 may be about 0.8 mg/s.bar.mm², about 0.9 mg/s.bar.mm², about 0.96 mg/s.bar.mm², about 1.0 mg/s.bar.mm², about 1.2 mg/s.bar.mm², about 1.5 mg/s.bar.mm², about 1.8 mg/s.bar.mm², about 2.0 mg/s.bar.mm², about 2.5 mg/s.bar.mm², about 2.8 mg/s.bar.mm², about 3.0 mg/s.bar.mm², about 3.5 mg/s.bar.mm², about 3.8 mg/s.bar.mm², about 3.85 mg/s.bar.mm², or about 4.0 mg/s.bar.mm², or may be in a range composed of any two of the above values, for example, a range of about 0.8 mg/s.bar.mm² to about 2.0 mg/s.bar.mm², about 0.9 mg/s.bar.mm² to about 2.5 mg/s.bar.mm², about 0.96 mg/s.bar.mm² to about 3.85 mg/s.bar.mm², about 1.35 mg/s.bar.mm² to about 2.88 mg/s.bar.mm², about 1.54 mg/s.bar.mm² to about 2.88 mg/s.bar.mm², about 1.54 mg/s.bar.mm² to about 3.85 mg/s.bar.mm², or 1.5 mg/s.bar.mm² to about 3.0 mg/s.bar.mm².

The permeation rate of the porous ceramic substrate 110 is related to the pore size of the porous ceramic substrate 110. In some embodiments, the pore size (D50) of the porous ceramic substrate 110 may be in a range of about 15 µm to about 25 µm. For example, in some embodiments, the pore size of the porous ceramic substrate 110 may be about 15 µm, about 16 µm, about 17 µm, about 18 µm, about 19 µm, about 20 µm, about 21 µm, about 22 µm, about 23 µm, about 24 µm, or about 25 µm, or may be in a range composed of any two of the above values, for example, a range of about 15 µm to about 20 µm, about 15 µm to about 22 µm, about 18 µm to about 20 µm, about 18 µm to about 22 µm, about 18 µm to about 25 µm, or about 20 µm to about 25 µm.

The permeation rate of the porous ceramic substrate 110 is further related to the porosity of the porous ceramic substrate 110. In some embodiments, the porosity of the porous ceramic substrate 110 may be in a range of about 40% to about 50%. For example, in some embodiments, the porosity of the porous ceramic substrate 110 may be about 40%, about 41%, about 42%, about 43%, about 44%, about 45%, about 46%, about 47%, about 48%, about 49%, or about 50%, or may be in a range composed of any two of the above values, for example, a range of about 40% to about 45%, about 45% to about 48%, about 45% to about 50%, or about 45% to about 50%.

The permeation rate of the porous ceramic substrate 110 is further related to the viscosity of the e-liquid. The inventor studied an e-liquid with a viscosity range of about 120 mPa.s to about 200 mPa.s and found that for the e-liquid with the viscosity range, using a porous ceramic substrate with a permeation rate in a range of about 0.8 mg/s.bar.mm² to 4.0 mg/s.bar.mm² can resolve problems of dry burning and oil leakage, and ensure that a smoke generation rate and a smoke amount of the electronic cigarette meet use requirements. In some embodiments, the viscosity of the e-liquid may be about 120 mPa.s, about 130 mPa.s, about 140 mPa.s, about 150 mPa.s, about 160 mPa.s, about 170 mPa.s, about 180 mPa.s, about 190 mPa.s, or about 200 mPa.s, or may be in a range composed of any two of the above values, for example, a range of about 120 mPa.s to about 150 mPa.s or about 150 mPa.s to about 200 mPa.s.

In some embodiments, the porous ceramic substrate 110 may comprise a first material, a second material, and a pore-forming agent. In some embodiments, the first material may comprise at least one of alumina, aluminum nitride, or zirconia. In some embodiments, the second material may comprise at least one of silicon dioxide, calcium oxide, magnesium oxide, silicon nitride, or silicon carbide. In some embodiments, the pore-forming agent may comprise at least one of sawdust, graphite, carbon powder, cellulose, or starch. In some embodiments, the first material is alumina, the second material is silicon dioxide, and the pore-forming agent is carbon powder.

In some embodiments, a weight ratio of the first material, the second material, and the pore-forming agent is: (45-65):(20-40):(1-15). In some embodiments, the weight ratio of the first material, the second material, and the pore-forming agent may be: (45-65):(30-40):(1-10), (45-65):(20-40):(5-15) or (55-65):(25-35):(5-12). For example, in some embodiments, the weight ratio of the first material, the second material, and the pore-forming agent may be 45:40:15, 60:38:2, 50:40:10, 60:30:10, 55:35:10, or the like.

In some embodiments, in addition to the first material, the second material, and the pore-forming agent, the porous ceramic substrate 110 may further comprise a sintering aid. The sintering aid can improve the bending strength and the scratch resistance of the porous ceramic substrate 110. In some embodiments, the sintering aid comprises at least one of calcium carbonate, magnesium carbonate, talc powder, or sodium silicate. In some embodiments, the first material is alumina, the second material is silicon dioxide, the sintering aid is sodium silicate, and the pore-forming agent is starch.

In some embodiments, a weight ratio of the first material, the second material, the sintering aid, and the pore-forming agent is: (45-65):(20-40):(1-8):(1-15). In some embodiments, the weight ratio of the first material, the second material, and the pore-forming agent may be: (45-65):(30-40):(1-8):(1-10) or (50-60):(25-35):(2-8):(5-12). For example, in some embodiments, the weight ratio of the first material, the second material, the sintering aid, and the pore-forming agent may be 45:40:5:10, 50:35:5:10, 55:30:5:10, 60:30:5:5, 65:20:5:10, 65:30:2:3, 65:30:1:4, or the like.

In some embodiments, the porous ceramic substrate 110 is mainly formed through accumulation of particles of the first material and particles of the second material. The particles on a surface of the porous ceramic substrate 110 are at risk of being peeled off by an external force, which provides scratch resistance for the porous ceramic substrate. The material composition, the pore size, and the porosity of the porous ceramic substrate 110 define the scratch resistance of the porous ceramic substrate 110. In some embodiments, a scratch resistance of the porous ceramic substrate is in a range of about 3wt% to about 10wt%. For example, in some embodiments, the scratch resistance of the porous ceramic substrate is about 3wt%, 3.5wt%, about 4wt%, 4.5wt%, about 5wt%, about 6wt%, about 7wt%, about 8wt%, about 9wt%, or about 10wt%, or may be in a range composed of any two of the above values, for example, a range of about 3wt% to about 4wt%, about 3wt% to about 5wt%, about 4wt% to about 5wt%, about 5wt% to about 7wt%, about 5wt% to about 10wt%, about 6wt% to about 9wt%, or about 7wt% to about 10wt%. The porous ceramic substrate 110 has good scratch resistance, which can reduce or prevent shedding of ceramic powder.

In some embodiments, the bending strength of the porous ceramic substrate 110 may be in a range of about 6 Mpa to about 12 Mpa. For example, in some embodiments, the bending strength of the porous ceramic substrate 110 may be about 6 Mpa, about 6.5 Mpa, about 7 Mpa, about 7.5 Mpa, about 8 Mpa, about 8.5 Mpa, about 9 Mpa, about 9.5 Mpa, about 10 Mpa, about 10.5 Mpa, about 11 Mpa, or about 11.5 Mpa, about 12 Mpa, or may be in a range composed of any two of the above values, for example, a range of about 6 Mpa to about 10 Mpa, 8 Mpa to about 10 Mpa, 10 Mpa to about 12 Mpa, about 8.5 Mpa to about 10.5 Mpa, or about 10.5 Mpa to about 12 Mpa. The bending strength of the porous ceramic substrate 110 is relatively large, which can meet the requirement for automated assembly, and further meet the strength requirement for an automated gripper/sucker and the assembly pressure requirement for an ejector pin in a cartridge.

In some embodiments, the thickness of the porous ceramic substrate 110 is in a range of about 0.5 mm to about 4 mm. In some embodiments, the thickness of the porous ceramic substrate 110 may be about 0.5 mm, about 1.0 mm, about 1.5 mm, about 2.0 mm, about 2.5 mm, about 3.0 mm, about 3.5 mm, or about 4.0 mm, or may be in a range composed of any two of the above values, for example, a range of about 0.5 mm to about 2 mm, about 0.5 mm to about 3 mm, about 1 mm to about 2 mm, about 1 mm to about 3 mm, or about 1 mm to about 4 mm.

In one of the embodiments, thermal conductivity of the porous ceramic substrate 110 is in a range of about 0.5 W/mK to about 1.0 W/mK. For example, in some embodiments, the thermal conductivity of the porous ceramic substrate 110 may be about 0.5 W/mK, about 0.55 W/mK, about 0.6 W/mK, about 0.65 W/mK, about 0.7 W/mK, about 0.75 W/mK, about 0.8 W/mK, about 0.85 W/mK, about 0.9 W/mK, about 0.95 W/mK, or about 1.0 W/mK, or may be in a range composed of any two of the above values, for example, a range of about 0.5 W/mK to about 0.7 W/mK, about 0.5 W/mK to about 0.8 W/mK, about 0.5 W/mK to about 0.85 W/mK, or about 0.8 W/mK to about 1.0 W/mK. Due to the small thermal conductivity of the porous ceramic substrate in this application, the heat generated by the heating layer 120 can be prevented from conducting to the porous ceramic substrate 110, thereby reducing the heat loss of the heating layer 120.

The heating layer 120 may be arranged on the porous ceramic substrate 110 in various suitable ways. For example, the heating layer 120 may be arranged on the porous ceramic substrate 110 through sputtering, transfer printing, photoetching, or the like. When the heating layer 120 is arranged on the porous ceramic substrate 110 through sputtering, transfer printing, or photoetching, a part of the heating layer material may permeate into the porous ceramic substrate 110, forming a physical interlocking area with the porous ceramic substrate 110. In some embodiments, the depth of the physical interlocking area is in a range of 10 µm to 60 µm, to improve the bending strength of the porous ceramic substrate 110 and the peel resistance of the heating layer 120 (powder shedding). The heating layer 120 comprises a heating wire. The heating wire may comprise at least one of iron, aluminum, platinum, palladium, iron aluminum alloy, iron nickel alloy, iron chromium aluminum alloy, iron chromium alloy, palladium copper alloy, gold silver platinum alloy, gold silver alloy, palladium silver alloy, or gold platinum alloy.

According to another aspect of this application, this application further provides an atomizer, including a liquid storage cavity and the atomization core in this application. The liquid storage cavity may accommodate a liquid, and the atomization core may suck the liquid from the liquid storage cavity and atomize the liquid.

In some embodiments, the heating power of the atomizer may be in a range of about 6.5 W to about 18 W. For example, in some embodiments, the heating power of the atomizer may be about 6.5 W, about 7 W, about 8 W, about 9 W, about 10 W, about 11 W, about 12 W, about 13 W, about 14 W, about 15 W, about 16 W, about 17 W, or about 18 W, or may be in a range composed of any two of the above values, for example, a range of about 6.5 W to about 10 W, about 6.5 W to about 15 W, or about 10 W to about 18 W.

According to still another aspect of this application, this application further provides an electronic cigarette, including the atomizer in this application. The e-liquid of the electronic cigarette may be atomized by the atomizer to generate vapor inhalable by users. According to the embodiments of this application, the electronic cigarette in this application no longer has the problems of dry heating or oil leakage, and the smoke amount can meet the requirements of users, thereby providing good taste and experience for users.

In some embodiments, a smoke generation time of the electronic cigarette is in a range of about 0.4s to about 0.7s. For example, in some embodiments, the smoke generation time of the electronic cigarette may be about 0.4s, about 0.45s, about 0.5s, about 0.53s, about 0.55s, about 0.6s, about 0.65s, or about 0.7s, or may be in a range composed of any two of the above values, for example, a range of about 0.4s to about 0.5s, about 0.4s to about 0.55s, about 0.45s to about 0.55s, or about 0.4s to about 0.6s. By virtue of the atomization core, the electronic cigarette in this application has a larger smoke generation rate, so that the first smoke provides better experience.

In some embodiments, the smoke amount (i.e., total particulate matter, TPM) of the electronic cigarette is in a range of about 5 mg to about 7 mg per puff. In this application, a smoke capacity of each puff is 55 mL, and an inhalation duration of each puff is 3 seconds. Through statistics of the smoke requirements of a large number of users, it was found that good inhalation experience can only be achieved when the smoke amount is at least 5 mg, and even better inhalation experience can be achieved when the smoke amount is in a range of 6 mg to 7 mg. In some embodiments, the smoke amount of the electronic cigarette is about 5 mg, about 5.5 mg, about 6 mg, about 6.5 mg, about 7 mg, about 5 mg to about 6 mg, about 5.5 mg to about 6 mg, or about 6 mg to about 7 mg per puff.

In some embodiments, the service life of the electronic cigarette may be in a range of 500-800 puffs. The service life of the electronic cigarette in this application is tested by using the following method: a sufficient e-liquid is provided, and a cycle with inhalation for 3 seconds and then pause for 15 seconds is repeated with an inhalation amount of 55 mL until the smoke amount TPM is less than 5 mg, and the number of the cycles is recorded as the service life of the atomization core. By virtue of the atomization core, the electronic cigarette of this application can avoid the problems of dry heating and oil leakage and achieve a maximum smoke amount, thereby ensuring the required smoke amount for users while ensuring a relatively long service life of the electronic cigarette.

### Examples

In order to facilitate better understanding of this application, the following examples are used for description. These examples belong to the protection scope of this application, and do not limit the protection scope of this application.

### Test method:

Permeation rate: A sample is sealed and fixed on an end of a glass tube, with a ceramic convex surface facing outward. The inner diameter of the tube is 10 mm, and the height of the e-liquid is 20 cm. Counting starts from generation of the first e-liquid and lasts for 30 min. The e-liquid in the process is weighed, and a flow rate (mg/s) of oil is calculated. The viscosity of the e-liquid is 180 Pa.s.

Scratch resistance: A 1 kg weight is used. The porous ceramic sample is pressed against 240 grit sandpaper to rub by a length of 15 cm. The porous ceramic sample is weighed before and after the rubbing, to calculate a change rate.

Smoke amount test: An inhalation amount of each puff is 55 mL. An inhalation duration of each puff is 3 seconds. Each cycle includes inhalation for 3 seconds and then pause for 15 seconds. Every ten cycles constitute one test. Smoke amount per puff--total smoke amount of ten cycles/10.

Thermal conductivity: The porous ceramic substrate is tested at a test temperature of 200°C by using a thermal conductivity meter through a hot wire method.

Bending strength: The porous ceramic substrate specimen is tested on a universal material testing machine. The specimen is measured through a three-point bending method, with a loading rate of 0.5 mm/min. A calculation formula is as follows: Rf=3F×L/(2×b×h×h). Rf is the bending strength (Mpa), F is a load (Kg) when the specimen fractures, L is a distance (cm) between support blades, b is the width (cm) of the fracture of the specimen, and h is the thickness (cm) of the fracture of the specimen.

Smoke generation time: 1. The electronic cigarette is connected to a smoking machine and enables a mode with inhalation for 3S and stop for 15S. 2. A high-speed camera is aligned to a filter to take a video, and then a time difference between a moment at which a cigarette indicator light lights up and a moment at which the filter begins to generate smoke is selected from the video as the smoke generation time.

### Test result:

### I. Examples and comparative examples in which the porous ceramic substrate comprises the first material, the second material, and the pore-forming agent.

The porous ceramic substrate in the following examples and comparative examples is prepared by using alumina, silicon oxide, and the pore-forming agent through mixing, shaping, and sintering processes. The atomization core and the electronic cigarettes are prepared by using the prepared porous ceramic substrate through general methods. Compositions of the porous ceramic substrate in Examples 1-1 to 1-15 and Comparative examples 1-1 to 1-3 are shown in Table 1-1. Table 1-2 shows a relationship(s) between the pore size and the porosity and the permeation rate of the porous ceramic substrate in the electronic cigarette in Examples 1-1 to 1-8 and Comparative examples 1-1 to 1-2. The thickness of the porous ceramic substrate used in this section is 1 mm, and the heating power is 6.5 W.

**Table 1-1**

| Porous ceramic substrate | |
|---|---|
| Component | Weight percentage (wt%) |
| Alumina | 60 |
| Silicon oxide | 30 |
| Pore-forming agent (carbon powder) | 10 |

**Table 1-2**

| | Pore size/µm | Porosity/% | Permeation rate/(mg/s.bar.mm²) |
|---|---|---|---|
| Example 1-1 | 15 | 40 | 0.96 |
| Example 1-2 | 15 | 43 | 1.15 |
| Example 1-3 | 16 | 43 | 1.35 |
| Example 1-4 | 18 | 45 | 1.54 |
| Example 1-5 | 20 | 50 | 2.69 |
| Example 1-6 | 22 | 50 | 2.88 |
| Example 1-7 | 23 | 50 | 3.08 |
| Example 1-8 | 25 | 50 | 3.85 |
| Comparative example 1-1 | 14 | 40 | 0.77 |
| Comparative example 1-2 | 25 | 53 | 4.04 |

It may be learned from Table 1-2 that in a case that the viscosity of the e-liquid is constant, the permeation rate of the porous ceramic substrate is related to the pore size and the porosity of the porous ceramic substrate. The pore size and the porosity of the porous ceramic substrate may be selected by selecting a permeation rate in a specific range.

Table 1-3 shows a relationship(s) between the pore size and the porosity and the scratch resistance and the bending strength of the porous ceramic substrate in Examples 1-1 to 1-8 and Comparative examples 1-1 and 1-2.

**Table 1-3**

| | Pore size/µm | Porosity /% | Scratch resistance/% | Bending strength/ Mpa |
|---|---|---|---|---|
| Example 1-1 | 15 | 40 | 5 | 10 |
| Example 1-2 | 15 | 43 | 6 | 9 |
| Example 1-3 | 16 | 43 | 6.2 | 8.5 |
| Example 1-4 | 18 | 45 | 6.5 | 8 |
| Example 1-5 | 20 | 50 | 7 | 7.5 |
| Example 1-6 | 22 | 50 | 8.5 | 7.3 |
| Example 1-7 | 23 | 50 | 9 | 7 |
| Example 1-8 | 25 | 50 | 10 | 6.8 |
| Comparative example 1-1 | 14 | 40 | 4 | 6.5 |
| Comparative example 1-2 | 25 | 53 | 11 | 6 |

It may be learned from Table 1-3 that the pore size and the porosity of the porous ceramic substrate define the scratch resistance of the porous ceramic substrate. When the pore size of the porous ceramic substrate is in a range of about 15 µm to about 25 µm and the porosity is in a range of about 40% to about 50%, the scratch resistance of the porous ceramic substrate can be in a range of about 5wt% to about 10wt%.

Table 1-4 shows a relationship(s) between the permeation rate and the smoke amount (TPM) of the porous ceramic substrate and a heating wire temperature in the electronic cigarette in Examples 1-1 to 1-8 and Comparative examples 1-1 to 1-2, and the service life of the electronic cigarettes thereof.

**Table 1-4**

| | Permeation rate/(mg/s.ba r.mm²) | TPM/mg | Heating wire temperatur e/°C | Service life/bu ff |
|---|---|---|---|---|
| Example 1-1 | 0.96 | 4.5 | 295 | 500 |
| Example 1-2 | 1.15 | 5.5 | 290 | 600 |
| Example 1-3 | 1.35 | 6.0 | 285 | 700 |
| Example 1-4 | 1.54 | 6.1 | 280 | 750 |
| Example 1-5 | 2.69 | 6.2 | 275 | 800 |
| Example 1-6 | 2.88 | 6.3 | 270 | 800 |
| Example 1-7 | 3.08 | 6.4 | 265 | 750 |
| Example 1-8 | 3.85 | 6.5 | 260 | 700 |
| Comparative example 1-1 | 0.77 | 3.5 | 300 | 400 |
| Comparative example 1-2 | 4.04 | 6.5 | 260 | 450 |

It may be learned from Table 1-4 that when the permeation rate of the porous ceramic substrate is in a range of 0.8 mg/s.bar.mm² to 4.0 mg/s.bar.mm², the smoke amount of the electronic cigarette increases with the increase of the permeation rate, and the heating wire temperature decreases with the increase of the permeation rate. When the permeation rate of the porous ceramic substrate is less than 0.8 mg/s.bar.mm² (for example, 0.77 mg/s.bar.mm²), the heating wire temperature is relatively high, greatly increasing a probability of generating harmful substances such as formaldehyde and so on. When the permeation rate of the porous ceramic substrate is greater than 4.0 mg/s.bar.mm² (for example, 4.04 mg/s.bar.mm²), the smoke amount of the electronic cigarette no longer significantly increases. This is because the e-liquid flows excessively quickly, causing a failure of atomization of the excess e-liquid. In addition, the heating wire temperature is low at this time, and therefore the macromolecular essence in the e-liquid is not fully atomized.

Table 1-5 shows a relationship(s) between the pore size, the porosity, and the thermal conductivity of the porous ceramic substrate in the atomization core and the smoke generation time in Examples 1-8 to 1-15 and Comparative example 1-3.

**Table 1-5**

| | Pore size/µm | Porosity/% | Thermal conductivity (W/mK) | Smoke generation time/s |
|---|---|---|---|---|
| Example 1-8 | 25 | 50 | 0.5 | 0.4 |
| Example 1-9 | 25 | 48 | 0.55 | 0.45 |
| Example 1-10 | 20 | 48 | 0.6 | 0.5 |
| Example 1-11 | 20 | 45 | 0.7 | 0.53 |
| Example 1-12 | 19 | 45 | 0.8 | 0.55 |
| Example 1-13 | 19 | 43 | 0.85 | 0.6 |
| Example 1-14 | 18 | 43 | 0.9 | 0.65 |
| Example 1-15 | 18 | 40 | 1.0 | 0.7 |
| Comparative example 1-3 | 18 | 36 | 1.2 | 0.8 |

It may be learned from Table 1-5 that when the porous ceramic substrate comprises the first material, the second material, and the pore-forming agent, selecting a thermal conductivity in a range of 0.5 W/mK to 1.0 W/mK for the porous ceramic substrate can achieve a smoke generation time of less than or equal to 0.7s, thereby meeting the requirements of common consumers.

### II. Examples and comparative examples in which the porous ceramic substrate comprises the first material, the second material, the sintering aid, and the pore-forming agent.

The porous ceramic substrate in the following embodiments and comparative examples is prepared by using alumina, silicon oxide, the sintering aid, and the pore-forming agent through mixing, shaping, and sintering processes. The atomization core and the electronic cigarettes are prepared by using the prepared porous ceramic substrate through general methods. Compositions of the porous ceramic substrate in Examples 2-1 to 2-11 and Comparative examples 2-1 to 2-3 are shown in Table 2-1. Table 2-2 shows a relationship(s) between the pore size and the porosity and the permeation rate of the porous ceramic substrate in the electronic cigarette in Examples 2-1 to 2-5 and Comparative examples 2-1 to 2-2. The thickness of the porous ceramic substrate used in this section is 2mm, and the heating power is 9W.

**Table 2-1**

| Porous ceramic substrate | |
|---|---|
| Component | Weight percentage (wt%) |
| Alumina | 55 |
| Silicon oxide | 30 |
| Sintering aid (sodium silicate) | 5 |
| Pore-forming agent (starch) | 10 |

**Table 2-2**

| | Pore size/um | Porosity/ % | Permeation rate (mg/s.bar.mm²) |
|---|---|---|---|
| Example 2-1 | 18 | 45 | 1.54 |
| Example 2-2 | 20 | 50 | 2.69 |
| Example 2-3 | 22 | 50 | 2.88 |
| Example 2-4 | 23 | 50 | 3.08 |
| Example 2-5 | 25 | 50 | 3.85 |
| Comparativ e example 2-1 | 25 | 53 | 4.04 |
| Comparativ e example 2-2 | 15 | 40 | 0.77 |

Table 2-3 shows a relationship(s) between the pore size and the porosity and the scratch resistance and the bending strength of the porous ceramic substrate in Examples 2-1 to 2-5 and Comparative examples 2-1 and 2-2.

**Table 2-3**

| | Pore size/µm | Porosity /% | Scratch resistance/% | Bending strength/ Mpa |
|---|---|---|---|---|
| Example 2-1 | 18 | 45 | 3 | 10 |
| Example 2-2 | 20 | 50 | 3.5 | 9 |
| Example 2-3 | 22 | 50 | 4 | 8.6 |
| Example 2-4 | 23 | 50 | 4.5 | 8.2 |
| Example 2-5 | 25 | 50 | 5 | 8 |
| Comparative example 2-1 | 25 | 53 | 5.5 | 7.5 |

| | | | | |
|---|---|---|---|---|
| Comparative example 2-2 | 15 | 40 | 2.5 | 11 |

It may be learned from 2-3 that when the porous ceramic substrate is composed of the first material, the second material, the sintering aid, and the pore-forming agent, selecting a pore size in a range of about 18 µm to about 25 µm and a porosity in a range of about 45% to about 50% for the porous ceramic substrate can achieve scratch resistance in a range of about 3wt% to about 5wt% for the porous ceramic substrate.

Table 2-4 shows a relationship(s) between the permeation rate and the smoke amount of the porous ceramic substrate and a heating element temperature in the electronic cigarette in Examples 2-1 to 2-5 and Comparative examples 2-1 to 2-2, and the service life of the electronic cigarettes thereof.

**Table 2-4**

| | Permeation rate/(mg/s.ba r.mm²) | TPM/mg | Heating wire temperature/ °C | Servic e life/b uff |
|---|---|---|---|---|
| Example 2-1 | 1.54 | 6.1 | 305 | 800 |
| Example 2-2 | 2.69 | 6.2 | 295 | 900 |
| Example 2-3 | 2.88 | 6.3 | 290 | 1000 |
| Example 2-4 | 3.08 | 6.4 | 285 | 900 |
| Example 2-5 | 3.85 | 6.5 | 280 | 800 |
| Comparative example 2-1 | 4.04 | 6.5 | 280 | 750 |
| Comparative example 2-2 | 0.77 | 3.5 | 310 | 700 |

It may be learned from Table 2-4 that when the porous ceramic substrate is composed of the first material, the second material, the sintering aid, and the pore-forming agent, selecting a permeation rate in a range of 1.5 mg/s.bar.mm² to 4.0 mg/s.bar.mm² for the porous ceramic substrate can achieve a TPM of more than 6 mg for the atomization core.

Table 2-5 shows a relationship(s) between the pore size, the porosity, and the thermal conductivity of the porous ceramic substrate in the atomization core and the smoke generation time in Examples 2-1, 2-5 to 2-11 and Comparative example 2-3.

**Table 2-5**

| | Pore size/µm | Porosity/% | Thermal conductivity (W/mK) | Smoke generation time/s |
|---|---|---|---|---|
| Example 2-5 | 25 | 50 | 0.5 | 0.4 |
| Example 2-6 | 25 | 48 | 0.55 | 0.45 |
| Example 2-7 | 20 | 48 | 0.6 | 0.5 |
| Example 2-8 | 20 | 45 | 0.7 | 0.53 |
| Example 2-1 | 18 | 45 | 0.8 | 0.55 |
| Example 2-9 | 18 | 43 | 0.85 | 0.6 |
| Example 2-10 | 17 | 43 | 0.9 | 0.65 |
| Example 2-11 | 17 | 40 | 1.0 | 0.7 |
| Comparative example 2-3 | 17 | 36 | 1.2 | 0.8 |

It may be learned from Table 2-5 that when the porous ceramic substrate is composed of the first material, the second material, the sintering aid, and the pore-forming agent, selecting a thermal conductivity in a range of 0.5 W/mK to 1.0 W/mK for the porous ceramic substrate can also achieve a smoke generation time of less than or equal to 0.7s, thereby meeting the requirements of common consumers.

It may be learned from the above embodiments of this application, it should be understood that this application provides an electronic cigarette that comprises the porous ceramic substrate with the specific permeation rate, which can resolve the problems of dry heating and oil leakage of the atomization core, and does not produce harmful substances such as tar, suspended particles and so on. Meanwhile, the e-liquid can achieve a large smoke generation rate and a large smoke amount during inhalation of users, and the taste of the smoke is smooth and does not impose a feeling of residuals, thereby improving user experience.

The references to "some embodiments", "some embodiments," "an embodiment", "another example", "example", "specific example", or "some examples" throughout the specification mean that at least one embodiment or example in this application includes specific features, structures, materials, or characteristics described in that embodiment or example. Therefore, descriptions such as "in some embodiments", "in an embodiment", "in one example", "in another example", "in an example", "in a specific example", or "for example" that appear throughout the specification do not necessarily mean the same embodiment or example in this application. In addition, specific features, structures, materials, or characteristics herein may be combined in any suitable way in one or more embodiments or examples.

Although illustrative embodiments have been demonstrated and described, a person skilled in the art should understand that the above embodiments cannot be interpreted as a limitation on this application, and may be changed, replaced, and modified without departing from the spirit, principles, and scope of this application.

## Claims

1. An atomization core, comprising:
a porous ceramic substrate; and
a heating layer, arranged on the porous ceramic substrate,
wherein the permeation rate of the porous ceramic substrate is in a range of 0.8 mg/s.bar.mm² to 4.0 mg/s.bar.mm².

2. The atomization core according to claim 1, wherein the pore size of the porous ceramic substrate is in a range of 15 µm to 25 µm.

3. The atomization core according to claim 1, wherein the porosity of the porous ceramic substrate is in a range of 40% to 50%.

4. The atomization core according to claim 1, wherein the porous ceramic substrate comprises a first material, a second material and a pore-forming agent, wherein the first material comprises at least one of alumina, aluminum nitride or zirconia, the second material comprises at least one of silicon dioxide, calcium oxide, magnesium oxide, silicon nitride or silicon carbide, and/or the pore-forming agent comprises at least one of sawdust, graphite, carbon powder, cellulose or starch.

5. The atomization core according to claim 4, wherein a weight ratio of the first material, the second material, and the pore-forming agent is: (45-65):(20-40):(1-15).

6. The atomization core according to claim 1, wherein the porous ceramic substrate comprises a first material, a second material, a sintering aid and a pore-forming agent, wherein the first material comprises at least one of alumina, aluminum nitride, or zirconia, the second material comprising at least one of silicon dioxide, calcium oxide, magnesium oxide, silicon nitride or silicon carbide, the sintering aid comprises at least one of calcium carbonate, magnesium carbonate, talc powder or sodium silicate, and/or the pore-forming agent comprises at least one of sawdust, graphite, carbon powder, cellulose or starch.

7. The atomization core according to claim 6, wherein a weight ratio of the first material, the second material, the sintering aid, and the pore-forming agent is: (45-65):(20-40):(1-8):(1-15).

8. The atomization core according to claim 1, wherein a scratch resistance of the porous ceramic substrate is in a range of 3wt% to 10wt%.

9. The atomization core according to claim 1, wherein the bending strength of the porous ceramic substrate is in a range of 6 Mpa to 12 Mpa.

10. The atomization core according to claim 1, wherein the thickness of the porous ceramic substrate is in a range of 0.5 mm to 4 mm.

11. The atomization core according to claim 1, wherein the thermal conductivity of the porous ceramic substrate is in a range of 0.5 W/mK to 1.0 W/mK.

12. The atomization core according to claim 1, wherein the heating layer comprises a heating wire, the heating wire comprising at least one of iron, aluminum, platinum, palladium, iron aluminum alloy, iron nickel alloy, iron chromium aluminum alloy, iron chromium alloy, palladium copper alloy, gold silver platinum alloy, gold silver alloy, palladium silver alloy or gold platinum alloy.

13. An atomizer, comprising:
a liquid storage cavity, configured to accommodate a liquid; and
the atomization core according to any of claims 1 to 12, the atomization core being configured to suck the liquid from the liquid storage cavity and atomize the liquid.

14. The atomizer according to claim 13, wherein the viscosity of the liquid is in a range of 120 mPa.s to 200 mPa.s.

15. The atomizer according to claim 13, wherein a heating power of the atomizer is in a range of 6.5 W to 18 W.

16. An electronic cigarette, comprising the atomizer according to any of claims 13 to 15.

17. The electronic cigarette according to claim 16, wherein a smoke generation time of the electronic cigarette is in a range of 0.4s to 0.7s.

18. The electronic cigarette according to claim 16, wherein a smoke amount of the electronic cigarette is in a range of 5 mg to 7 mg per puff.
